# EUROPEAN PATENT SPECIFICATION

(11) **EP 4 092 207 B1**
(45) Date of publication and mention of the grant of the patent: **22.05.2024**
(21) Application number: 21215166.6
(22) Date of filing: 16.12.2021
(51) Int. Cl.: E03C 1/04, F16K 27/02

(54) **SHOWER SET**
DUSCHSET
ENSEMBLE DE DOUCHE

(30) Priority: 21.05.2021 CN 202110561045
(43) Date of publication of application: 23.11.2022
(73) Proprietor: Fujian Xihe Sanitary Ware Technology Co., Ltd, QuanZhou, Fujian 362304 (CN)
(72) Inventor: LIN, Xiaofa, QuanZhou, 362304 (CN); LIN, Xiaoshan, QuanZhou, 362304 (CN); YU, Kaishi, QuanZhou, 362304 (CN); DENG, Xiaoqing, QuanZhou, 362304 (CN); LIU, Qiqiao, QuanZhou, 362304 (CN); JI, Hejun, QuanZhou, 362304 (CN); DU, Haibo, QuanZhou, 362304 (CN)
(74) Representative: Argyma

(56) References cited:
- EP-A1- 3 015 610
- JP-A- H0 988 136

## Description

### BACKGROUND

### Technical Field

The present disclosure relates to the sanitary ware field, in particular to a shower set.

### Description of Related Art

With development of science and technology, showers on the market are increasingly diversified in function. Some showers simultaneously has the function of outputting water of constant temperature and the function of switching the water outflow channel, wherein the function of outputting water of constant temperature and the function of switching the water outflow channel of the showers are implemented by mounting a thermostatic valve element and a switching valve element respectively at two ends of the shower. The thermostatic valve element can adjust a mixing ratio of cold water and hot water automatically, such that the temperature of the mixed water is kept at a set temperature automatically, and the switching valve element can switch between outputting water from a wall-hung shower head and outputting water from a hand-held shower head.

When the thermostatic valve element and the switching valve element in the shower are mounted, as most hot water inlet pipes and cold water inlet pipes are fixed in position, if a user intends to interchange the left and right positions of the thermostatic valve element and the switching valve element according to a using habit, the user has to rotate the whole shower at 180 degrees. However, for most thermostatic valve element, cold water is fed from the left side and hot water is fed from the right side, such that a situation that the hot water is fed from the left side and the cold water is fed from the right side for the thermostatic valve element will be caused by directly rotating the shower, such that the function of the thermostatic valve element to output water of constant temperature is failed. Therefore, the user cannot interchange the position of a constant temperature module on the shower at will according to the using habit.

EP3015610A1 and JPH0988136A disclose a shower-column type constant temperature filter faucet according to the prior art.

### SUMMARY

An object of the disclosure is to overcome the defects or problems in the background art and to provide a shower set capable of interchanging the positions of a thermostatic valve element and a switching valve element by rotating a shower according to user requirement.

In order to achieve the object, a technical scheme is adopted as follows:
a shower set includes a thermostatic valve element, a switching valve element, a main body, a first valve seat and a second valve seat. One end of the thermostatic valve element is provided with a first water passing port, a side wall of the thermostatic valve element is provided with a hot water inlet and a cold water inlet; one end of the switching valve element is provided with a second water passing port and a third water passing port, and a side wall of the switching valve element is provided with a mixed water inlet communicating with the second water passing port and the third water passing port; one end of the main body is provided with a switching valve element accommodation cavity for accommodating the switching valve element and the other end of the main body is provided with a valve seat accommodation cavity; a side wall of the main body is provided with a first water inlet close to the valve seat accommodation cavity and a second water inlet close to the switching valve element accommodation cavity as well as a first water outlet and a second water outlet; the first water inlet and the second water inlet are used for being externally connected with a cold water inlet pipe and a hot water inlet pipe interchangeably; the first water inlet and the second water inlet are communicated to the valve seat accommodation cavity via a first water inlet channel and a second water inlet channel respectively; the valve seat accommodation cavity is communicated to the mixed water inlet via a first water passing channel; the second water passing port and the third water passing port of the switching valve element are respectively communicated to the first water outlet and the second water outlet via a second water passing channel and a second water passing channel respectively; the first valve seat is inserted into the valve seat accommodation cavity when the first water inlet is externally connected with the hot water inlet pipe and the thermostatic valve element is placed in the first valve seat, an end portion of the first valve seat is provided with a first opening communicating with the first water passing channel and the first water passing port, a side wall of the first valve seat is provided with a first hole communicating with the hot water inlet and a second hole communicating with the cold water inlet, and when the first valve seat is inserted into the valve seat accommodation cavity, the first hole is communicated with the first water inlet channel and the second hole is communicated with the second water inlet channel; and the second valve seat is inserted into the valve seat accommodation cavity when the first water inlet is externally connected with the cold water inlet pipe and the thermostatic valve element is placed in the second valve seat, an end portion of the second valve seat is provided with a second opening communicating with the first water passing channel and the first water passing port, a side wall of the second valve seat is provided with a third hole communicating with the hot water inlet and a fourth hole communicating with the cold water inlet, and when the second valve seat is inserted into the valve seat accommodation cavity, the fourth hole is communicated with the first water inlet channel and the third hole is communicated with the second water inlet channel.

When the first water inlet is externally connected with the hot water inlet pipe and the second water inlet is externally connected with the cold water inlet pipe, the first vale seat is inserted into the valve seat accommodation cavity of the main body, and the thermostatic valve element is mounted in the first valve seat, such that hot water passing through the first water inlet channel flows into the hot water inlet of the thermostatic valve element via the first hole of the first valve seat, and the cold water passing through the second water inlet channel flows into the cold water inlet of the thermostatic valve element via the second hole of the first valve seat, and the thermostatic valve element thus can be used normally. The mixed water mixed by the thermostatic valve element flows to the mixed water inlet of the switching valve element via the first water passing port and the second water passing port and is conveyed to the first water outlet from the second water passing port via the second water passing channel or is conveyed to the second water outlet from the third water passing port via the third water passing channel by the switching valve element. If it is required to switch the left and right positions of the switching valve element and the thermostatic valve element, after the externally connected hot water inlet pipe and the externally connected cold water inlet pipe are detached, the main body is rotated at 180 degrees, such that the positions of the switching valve element and the thermostatic valve element are interchanged, and the first valve seat in the main body is replaced by the second valve element, and the thermostatic valve element is mounted in the second valve seat. At the time, the first water inlet is externally connected with the cold water inlet pipe, the second water inlet is externally connected with the hot water inlet pipe, cold water passing through the first water inlet channel flows into the cold water inlet in the thermostatic valve element via the fourth hole in the second valve seat and hot water passing through the second water inlet channel flows into the hot water inlet in the thermostatic valve element via the third hole in the second valve seat, such that the valve elements interchanged in positions can be used normally. The user can interchange the positions of the thermostatic valve element and the switching valve element on the main body of the shower according to user requirement.

Other characteristics and advantages of the embodiments of the disclosure will be described in the following description, and partially become obvious from the description or are understood by implementing the embodiments of the disclosure. Other advantages of the embodiments of the disclosure can be realized and gained by schemes described in the description and drawings.

Other aspects can be made clear after reading and comprehending the accompanying drawings and the detailed description.

### BRIEF DESCRIPTION OF THE DRAWINGS

Fig. 1 is a three-dimensional exploded schematic diagram of a shower set according to the embodiment;
Fig. 2 is a three-dimensional structural schematic diagram of a thermostatic valve element according to the embodiment;
Fig. 3 is a three-dimensional structural schematic diagram of a switching valve element according to the embodiment;
Fig. 4 is a three-dimensional structural schematic diagram of an outer shell according to the embodiment;
Fig. 5 is a side view schematic diagram of a water channel body according to the embodiment;
Fig. 6 is a sectional schematic diagram of Fig. 5 along A-A direction;
Fig. 7 is a sectional schematic diagram of Fig. 5 along B-B direction;
Fig. 8 is a three-dimensional structural schematic diagram of a first valve seat according to the embodiment;
Fig. 9 is a sectional schematic diagram of the first valve seat according to the embodiment;
Fig. 10 is a three-dimensional structural schematic diagram of a second valve seat according to the embodiment;
Fig. 11 is a sectional schematic diagram of the second valve seat according to the embodiment;
Fig. 12 is a three-dimensional structural schematic diagram of a first gland cap according to the embodiment;
Fig. 13 is a three-dimensional structural schematic diagram of a second gland cap according to the embodiment;
Fig. 14 is a sectional schematic diagram of the second gland cap according to the embodiment;
Fig. 15 is a sectional schematic diagram of the shower set according to the embodiment at a first angle by employing the first valve seat;
Fig. 16 is a sectional schematic diagram of the shower set according to the embodiment at a second angle by employing the first valve seat;
Fig. 17 is a sectional schematic diagram of the shower set according to the embodiment at a first angle by employing the second valve seat;
Fig. 18 is a sectional schematic diagram of the shower set according to the embodiment at a second angle by employing the second valve seat.

Descriptions of main reference numerals:

### D1First direction

1 thermostatic valve; 11 first operating portion; 12 first valve element body; 13 first water passing port; 14 hot water inlet; 15 cold water inlet; 16 first protrusion;
2switching valve element; 21second operating portion; 22second valve element body; 23 second water passing port; 24 third water passing port; 25 mixed water inlet; 26 first abutting wall;
3main body;31 outer shell; 311 first water outlet; 312 second water outlet; 313 first water inlet; 314second water inlet; 32 water channel body; 321 first end; 322 second end; 323 first partition plate; 324 switching valve element accommodation cavity; 325 first cavity; 326 fifth hole; 327 sixth hole; 328a first water passing channel; 328b second water passing channel; 328c third water passing channel; 329 second water inlet channel;
4 first valve seat; 41 first valve seat body; 42 third end; 43 fourth end; 44 second abutting wall; 45 first hole; 46 second hole; 47 first position-limiting surface; 48a first sealing ring slot; 48b second sealing ring slot; 48cthird sealing ring slot; 49 fourth water passing port;
5 second valve seat; 51 second valve seat body; 52 fifth end; 53 sixth end; 54 third abutting wall;
55 second position-limiting surface; 56 fourth sealing ring slot; 57 fifth sealing ring slot; 58 third hole; 59 fourth hole;
6 first gland cap; 61 first gland cap body; 62 first flange;
7 second gland cap; 71 second gland cap body; 72 fourth abutting wall; 73 sixth sealing ring slot;
8 first sealing ring;
9 second sealing ring;
10 third sealing ring;
a first joint;
b second joint;
c third joint;
d fourth joint.

### DESCRIPTION OF THE EMBODIMENTS

The technical solutions in the embodiments will be clearly and completely described below with reference to the accompanying drawings.

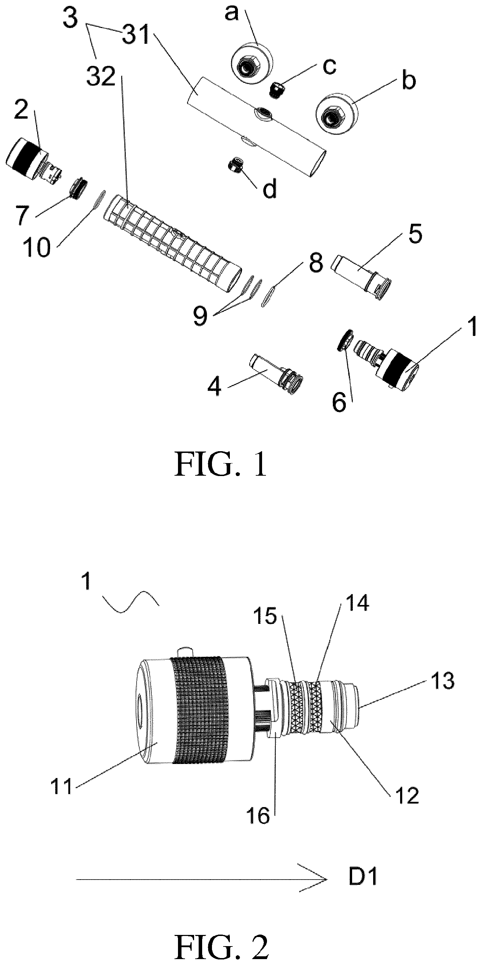

Fig. 1 shows the shower set, including the thermostatic valveelement1, the switching valve element 2, the main body 3, the first valve seat 4, the second valve seat 5, the first gland cap 6, the second gland cap 7, the first joint a, the second joint b, the third joint c, the fourth joint d, the first sealing ring 8, the second sealing ring 9 and the third sealing ring 10.

As shown in Fig. 2, the thermostatic valve element 1 includes the first operating portion 11 and the first valve element body 12 connected along the first direction D1. One end of the first valve element body 12 is detachably connected with the first operating portion 11 and the other end of the first valve element body 12is provided with the first water passing port 13. A side wall of the first valve element body 12 is provided with the hot water inlet 14 and the cold water inlet 15, wherein the cold water inlet 15 is closer to the first operating portion 11 than the hot water inlet 14. An outer wall of the first valve element body 12 is provided with the first protrusion 16 circumferentially, and the first protrusion 16 is closer to the first operating portion 11 than the cold water inlet 15.

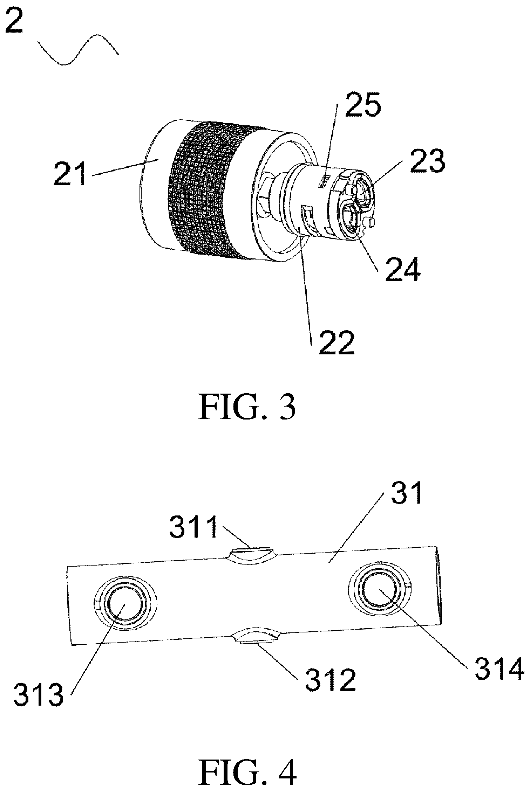

As shown in Fig. 3, the switching temperature valve element 2 includes the second operating portion 21 and the second valve element body 22 connected along the first direction D1. One end of the second valve element body 22 is detachably connected with the second operating portion 21 and the other end of the second valve element body 22 is provided with the second water passing port 23 and a third water passing port 24. A side wall of the second valve element body 22 is provided with the mixed water inlet 25 and the first abutting wall 26 facing the second operating portion 21.

As shown in Fig. 1, the main body 3 includes the outer shell 31 and the water channel body 32, wherein the outer shell 31 and the water channel body 32 are cylindrical tubular bodies equal in length, and the outer shell 31 sleeves outside the water channel body 32.

As shown in Fig. 4, a middle position of the side wall of the outer shell 31 is symmetrically provided with the first water outlet 311 and the second water outlet 312 relative to the axis, and axes of the first water outlet 311 and the second water outlet 312 are located on the first axis. The side wall of the outer shell 31 close to two ends of the outer shell 31 is symmetrically provided with the first water inlet 313 and the second water inlet 314 relative to the first axis, the axes of the first water inlet 313 and the second water inlet 314 are perpendicular to the first axis, and the first water inlet 313 and the second water inlet 314 are externally connected with the cold water inlet pipe and the hot water inlet pipe interchangeably,.

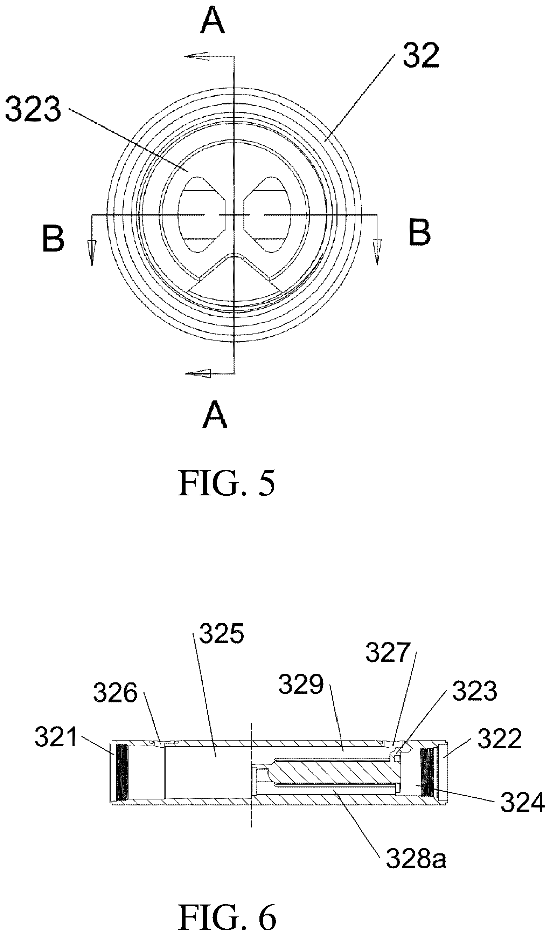

As shown in Fig. 5 to Fig. 7, the water channel body 32 forms the first end 321 and the second end 322 of openings along the first direction D1, the water channel body 32 is provided with the first partition plate 323 in a position close to the second end 322, the first partition plate 323 divides an inner cavity of the water channel body 32 into the switching valve element accommodation cavity 324 and the first cavity 325, and the opening of the second end 322 forms an opening of the switching valve element accommodation cavity 324; the switching valve element accommodation cavity 324 is used for accommodating the switching valve element 2, and the inner wall of the switching valve element accommodation cavity 324 close to the second end 322 of the water channel body 32 is provided with a thread. The fifth hole 326 and the sixth hole 327 respectively aligned with the first water inlet 313 and the second water inlet 314 penetrate through the side wall of the water channel body 32. The first cavity 325 is internally provided with the first water passing channel 328a, the second water passing channel 328b and the third water passing channel 328c. One end of the first water passing channel 328a penetrates through the first partition plate 323 and is communicated with the switching valve element accommodation cavity 324 and the other end of the first water passing channel 328a faces the opening of the first end 321 of the outer shell 31 body. The switching valve element accommodation cavity 324 is communicated to the first water outlet 311 via the second water passing channel 328b and is communicated with the second water outlet 312 via the third water passing channel 328c. The valve seat accommodation cavity is formed in an area between a first plane where an end surface of the first water passing channel 328a facing the first end 321 is located and a second plane where the first end 321 is located, and the inner wall of the valve seat accommodation cavity close to the first end 321 is provided with a thread. The fifth hole 326 in the water channel body 32 is communicated with the valve seat accommodation cavity, and the sixth hole 327 is close to the switching valve element accommodation cavity 324, wherein the fifth hole 326 forms the first water inlet channel, and the first water inlet channel is communicated with the valve seat accommodation cavity along the direction where the first water inlet 313 is formed; the areas of the first cavity 325 except the first water passing channel 328a, the second water passing channel 328b, the third water passing channel 328c and the valve seat accommodation cavity is communicated with the sixth hole 327 to form the second water inlet channel 329, and the second water inlet channel 329 is communicated with the valve seat accommodation cavity in a direction perpendicular to the direction where the second water inlet 314 is formed.

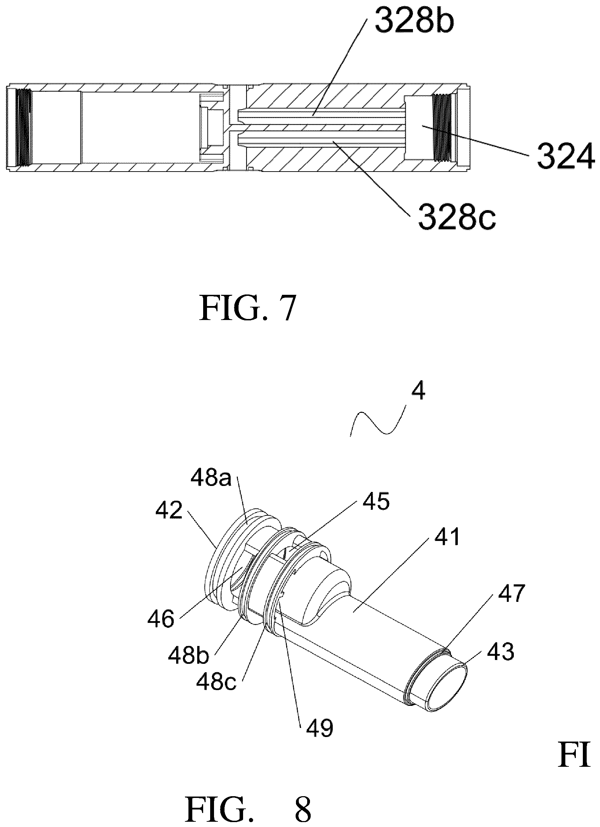

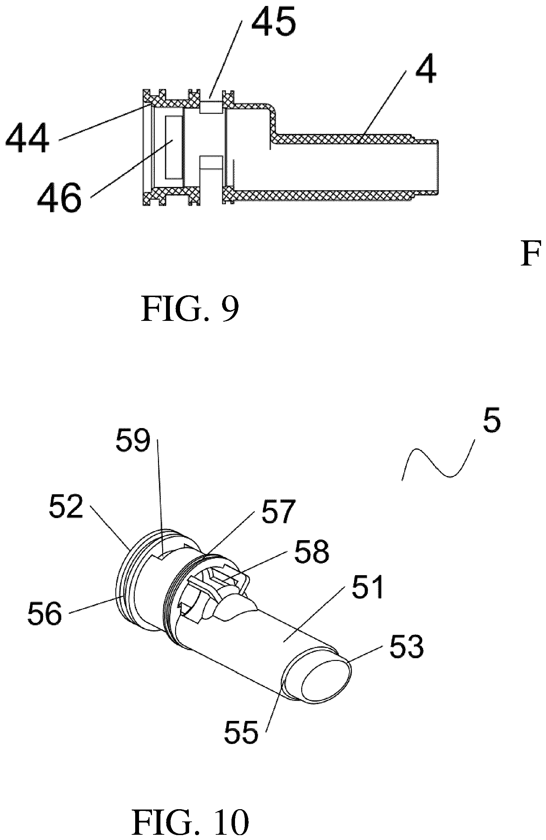

The first valve seat 4, as shown in Fig. 8 and Fig. 9, includes the first valve seat body 41. The first valve seat body 41 is provided with a second cavity along the first direction D1, and the second cavity is opened in the third end 42 and the fourth end 43. An inner wall of the second cavity close to the third end 42 is circumferentially provided with the second abutting wall 44 facing the third end 42, the opening of the second cavity in the fourth end 43 forms the first opening, and the outer diameter of the first opening is matched with the inner diameter of one end of the first water passing channel 328a facing the first end 321. The outer wall of the first valve seat 4 close to the first opening is provided with the first position-limiting surface 47 facing the first opening. The outer wall of the third end 42 of the first valve seat 4 is provided with the first sealing ring slot 48a, the second holes 46 and the annular protrusion from left to right in sequence along the first direction D1, wherein two second holes 46 are formed circumferentially. The side walls at two ends of the annular protrusion are provided with the second sealing ring slot 48b and the third sealing ring slot 48c, wherein the second sealing ring slot 48b is closer to the first sealing ring slot 48a. Aside wall, between the second sealing ring slot 48b and the third sealing ring slot 48c, of the annular protrusion is provided with a first hole 45, the firsthole45is penetrating through the annular protrusion and is communicated with the second cavity,, and the direction where the first hole 45 is formed is perpendicular to the direction where the second hole 46 is formed. The annular protrusion is provided with several fourth water passing ports 49 penetrating from the end surface of one end of the annular protrusion to the end surface of the other end of the annular protrusion, and the fourth water passing ports 49 form the first water passing channel.

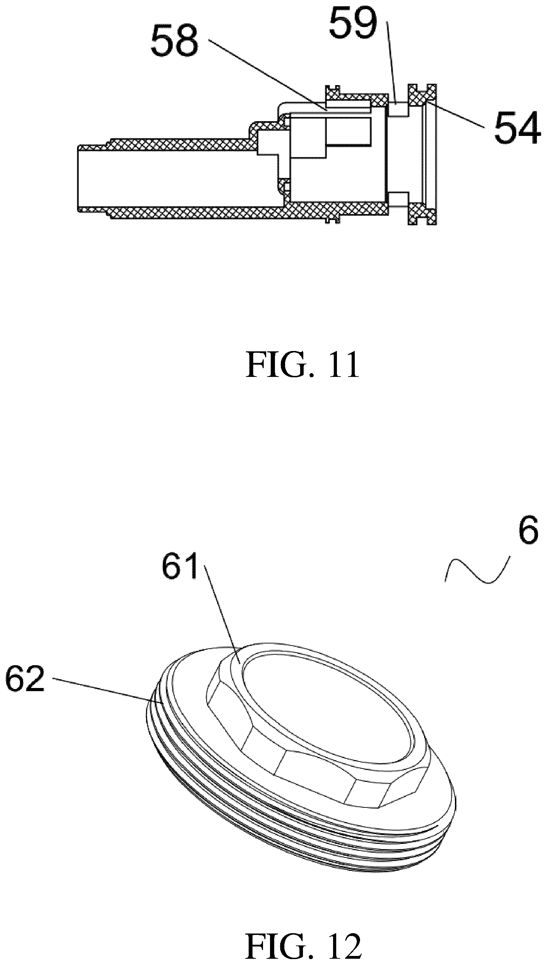

The second valve seat 5, as shown in Fig. 10 and Fig. 11, includes the second valve seat body 51. The second valve seat body 51 is provided with a third cavity along the first direction D1, and the third cavity is opened in the fifth end 52 and the sixth end 53. The inner wall of the third cavity close to the fifth end 52 is circumferentially provided with the third abutting wall 54 facing the fifth end 52, the opening of the third cavity in the sixth end 53 forms the second opening, and the outer diameter of the second opening is matched with the inner diameter of one end of the first water passing channel 328a facing the first end 321. The outer wall of the second valve seat 5 close to the second opening is provided with the second position-limiting surface 55 facing the second opening. The outer wall of the fifth end 52 of the second valve seat 5 is provided with the fourth sealing ring slot 56 and the fifth sealing ring slot 57 along the first direction D1, and the fifth sealing ring slot 57 is closer to the fifth end 52 than the fourth sealing ring slot 56. The side wall of the second valve seat 5 between the fourth sealing ring slot 56 and the fifth sealing ring slot 57 is provided with the fourth hole 59, the third hole 58 is formed between the fifth sealing ring slot 57 and the sixth end 53, and the third hole 58 is formed along the direction in which the second valve seat 58 is inserted into the valve seat accommodation cavity.

The first gland cap 6, as shown in Fig. 12, includes the first gland cap body 61, the first gland cap body 61 is cylindrical tubular and the inner diameter of the first gland cap body 61 is matched with the outer diameter of the first valve element body 12. The outer wall at one end of the first gland cap body 61 is circumferentially provided with the first flange 62, the outer diameter of the first flange 62 is matched with the inner diameter of the valve seat accommodation cavity, and the side wall of the first flange 62 is provided with a thread.

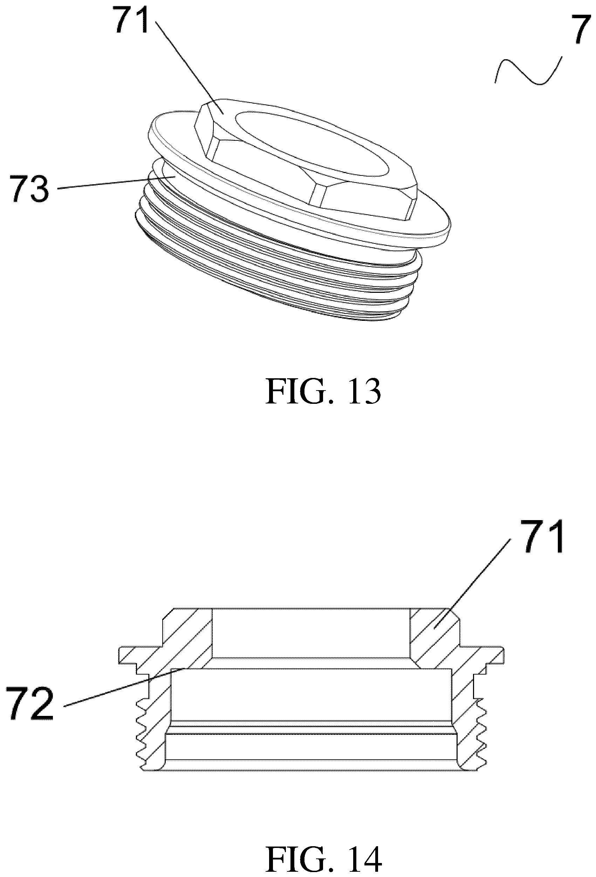

The second gland cap 7, as shown in Fig. 13, includes the second gland cap body 71, the second gland cap body 71 is cylindrical tubular and the inner diameter of the second gland cap body 71 is matched with the outer diameter of the second valve element body 22. The inner wall of the second gland cap body 71 is provided with a fourth abutting wall 72 abutting against the first abutting wall 26, and the outer wall of the second gland cap body 71 is provided with the thread and the sixth sealing ring slot 73.

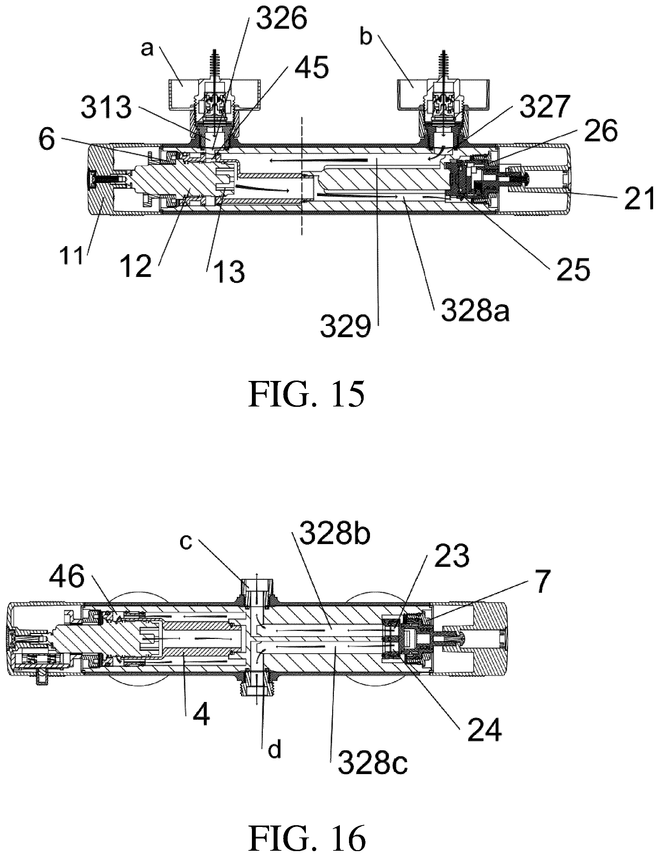

The first joint a, as shown in Fig. 1 and Fig. 15, is hermetically mounted on the first water inlet 313 and is used for being connected with the externally connected water inlet pipe.

The second joint b, as shown in Fig. 1 and Fig. 15, is hermetically mounted on the second water inlet 314 and is used for being connected with the externally connected water inlet pipe.

The third joint c, as shown in Fig. 1 and Fig. 15, is hermetically mounted on the first water outlet 311 and is used for being connected with the externally connected water outlet pipe.

The first joint d, as shown in Fig. 1 and Fig. 15, is hermetically mounted on the first water outlet 312 and is used for being connected with the externally connected water outlet pipe.

The first sealing ring 8, as shown in Fig. 1 and Fig. 8, is matched with the first sealing ring slot 48a and the fourth sealing ring slot 56.

Two sealing rings 9 are arranged, and as shown in Fig. 1 and Fig. 15, the two sealing rings 9 are matched with the second sealing ring slot 48b, the third sealing ring slot 48c and the fifth sealing ring slot 57.

The third sealing ring 10, as shown in Fig. 1 and Fig. 15, is matched with the sixth sealing ring slot 73 on the second gland cap 7.

During the assembly and use of the shower set of the embodiment, as shown in Fig. 15 to Fig. 18, the outer shell 31 sleeves outside the water channel body 32 first. Then, the third sealing ring 10 is mounted on the sixth sealing ring slot 72 of the second gland cap 7, the second gland cap 7 sleeves on the second valve element body 22, the second valve element body 22 is hermetically mounted in the switching valve accommodation cavity 324, and the second gland cap 7 is rotated, such that the second gland cap 7and the inner cavity wall of the switching valve element accommodation cavity 324 are in threaded connection, and the fourth abutting wall 72 on the second gland cap 7 pushes against the first abutting wall 26 on the switching valve element 2 to tightly press the switching valve element 2 against the switching valve element accommodation cavity 324, and the switching valve element 2 thus can be prevented from falling out from the switching valve element accommodation cavity 324 during use. The third sealing ring 10 is hermetically cooperated with the switching valve element accommodation cavity 324. At the moment, the end,away from the second water passing port 23, of the second valve element body 22 extends out of the water channel body 32; the second water passing port 23 in the second valve element body 22 is communicated with the end of the second water passing channel 328b of the water channel body 32 close to the second end 322, the third water passing port 24 of the switching valve element 2 is communicated with the end of the third water passing channel 328c of the water channel body 32 close to the second end 322, and the mixed water inlet 25 of the switching valve element 2 is communicated with the end of the first water passing channel 328a close to the second end 322. Then, the second operating portion 21 is mounted at the end of the second valve element body 22 extending out of the water channel body 32.

Then, the first joint a, the second joint b, the third joint c and the fourth joint d are hermetically mounted on the first water inlet 313, the second water inlet 314, the first water outlet 311 and the second water outlet 312 of the outer shell 31, respectively.

Then, as shown in Fig. 15 and Fig. 16, assuming the first water inlet 313 in an initial state is externally connected with hot water inlet pipe, the second water inlet 314 is externally connected with cold water inlet pipe. At the moment, the first sealing ring 8 sleeves on the first sealing ring slot 48a and the two second sealing rings 9 sleeve the second sealing ring slot 48b and the third sealing ring slot 48c respectively. Then, the first valve seat 4 is inserted into the valve seat accommodation cavity, such that the end of the first valve seat 4 provided with the first opening extends into the end of the first water passing channel 328a close to the first end of the water channel body 32 and is hermetically matched with the first water passing channel 328a; the first position-limiting surface 47 of the first valve seat 4 urges against the end surface of the first water passing channel 328a facing the first end 321 to limit the first valve seat 4 along the first direction D1. At the moment, the first sealing ring 8 and the second sealing ring 9 are hermetically matched with the inner wall of the valve seat accommodation cavity; the first hole 45 in the first valve seat 4 is aligned with the fifth hole 326 and the first water inlet 313; the outer wall,located between the third sealing ring slot 48c and the first opening,of the first valve seat body 41and the inner wall of the valve seat accommodation cavity enclose a first water passing gap communicating with the second water inlet channel 329 and the fourth water passing port 49; the first sealing ring 48a, the second sealing ring 48b and the outer wall of the first valve seat body 41 located between the first sealing ring 48a and the second sealing ring 48b and the inner wall of the valve seat accommodation cavity enclose a second water passing gap, and the second water passing gap is communicated with the fourth water passing port 48 and the second hole 46. Both the first water passing gap and the second water passing gap are circumferentially surrounded outside the first valve seat body such that cold water flowing from the second water inlet channel 329 to the second hole is coated outside the first valve seat body 41, thereby preventing scald effectively.

Then the first gland cap 6 sleeves on the first valve element body 12, and the first valve element body 12 is hermetically mounted in the first valve seat 4, such that the surface of the first protrusion 16,far away from the first end 321 of the water channel body 32,of the first valve seat body 12abuts against the second abutting wall 44 on the first valve seat body 41, and the end of the first valve seat body 12 far away from the first water passing port 13 extends out of the water channel body 32. At the moment, the first water passing port 13 in the thermostatic valve element 1 is communicated with the first water passing channel 328a via the first opening. Then, the first gland cap 6 is rotated, such that the first gland cap 6and the inner wall of the valve seat accommodation cavity are in threaded connection, and the first gland cap 6pushes against the surface of the first protrusion 16,facing the first end 321 of the water channel body 32,of the first valve seat body 12 to tightly press the first valve element body 12againstthe first valve seat 4, such that the thermostatic valve element 1 can be prevented from falling out from the first valve seat 4 during use.

Then, the first operating portion 11 is mounted at the end of the first valve element body 12 extending out of the water channel body 32; the first operating portion 11 is located outside the water channel body 32, and thereby, it is convenient for the user to adjust the thermostatic valve element 1. At the moment, the hot water inlet 14 and the cold water inlet 15 in the thermostatic valveelement1 are communicated with the first hole 45 and the second hole 46 in the thermostatic valveelement1 respectively.

Finally, the first water outlet 311 is connected with a water inlet pipe of a wall-hung shower and the second water outlet 312 is connected with a water inlet pipe of a handheld shower to finish installation.

When the shower set of the embodiment is used, hot water passing through the fifth hole 326 flows into the hot water inlet 14 in the thermostatic valveelement1 via the first hole 45 of the first valve seat 4, cold water from the second water inlet channel 329flowing to the second hole 46 via the first water passing gap, the fourth water passing port 49 and the second water passing gap in sequence then flows into the cold water inlet 15 of the thermostatic valveelement1, such that the thermostatic valveelement1 can be used normally. The mixed water mixed by the thermostatic valve element 1 flows to the mixed water inlet 25 of the switching valve element 2 via the first water passing port 13 and the second water passing port 328a and is conveyed to the first water outlet 311 or the second water outlet 312 through the switching valve element 2. The temperature of the mixed water can be adjusted by adjusting the first operating portion 11 of the thermostatic valveelement1, and water can be switched to flow out from the first water outlet 311 or the second water outlet 312 by adjusting the second operating portion 21 of the switching valve element 2.

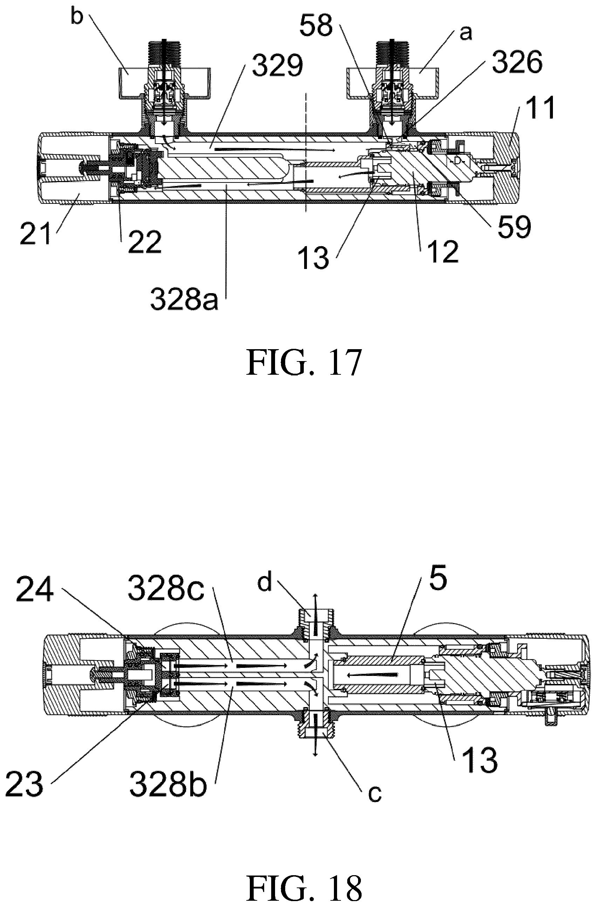

As shown in Fig. 17 and Fig. 18, if a user wants to interchange the left and right positions of the switching valve element 2 and the thermostatic valveelement1, after the externally connected hot water inlet pipe, cold water inlet pipe, water inlet pipe of the wall-hung shower and water inlet pipe of the handheld shower are detached, the main body 3 is rotated at 180 degrees, such that the positions of the switching valve element 2 and the thermostatic valve seat are interchanged. The thermostatic valveelement1, the first gland cap 6 and the first valve seat 4 are detached from the water channel body 32. Then, the first sealing ring 8 sleeves on the first sealing ring slot 56 of the second valve seat 5 and the second sealing ring 9 sleeves on the fifth sealing ring slot 57 on the second valve seat 5. Then, the second valve seat 5 is inserted into the valve seat mounting cavity of the water channel body 32, such that the end of the second valve seat 5 provided with the second opening extends into the end of the first water passing channel 328a close to the first end 321 of the water channel body 32 and is hermetically matched; the second position-limiting surface 55 of the second valve seat 5 urges against the end surface of the first water passing channel 328a facing the first end 321 to limit the second valve seat 5 along the first direction D1. The outer wall,located between the fifth sealing ring slot 57 and the second opening,of the second valve seat body 51 and the inner wall of the valve seat accommodation cavity enclose the third water passing gap communicating with the second water inlet channel 329 and the third hole 58. The fourth sealing ring slot 56, the fifth sealing ring slot 57 and the outer wall of the second valve seat body 51 located between the fourth sealing ring slot 56 and the fifth sealing ring slot 57 and the inner wall of the valve seat accommodation enclose the fourth water passing gap communicating with the first water inlet channel and the fourth hole 59.

Then the first gland cap 6 sleeves outside the first valve element body 12, and the first valve element body 12 is hermetically mounted in the second valve seat 5, such that the surface of the first protrusion 16,far away from the first end 321 of the water channel body 32, on the first valve seat body 12 abuts against the third abutting wall 54 on the second valve seat body 51, and the end of the first valve seat body 12 far away from the first water passing port 13 extends out of the water channel body 32. At the moment, the first water passing port 13 in the thermostatic valve element 1 is communicated with the first water passing channel 328a via the second opening. Then, the first gland cap 6 is rotated, such that the first gland cap 6 and the inner wall of the valve seat accommodation cavity are in threaded connection, and the first gland cap 6pushes against the surface of the first protrusion 16,facing the first end 321 of the water channel body 32,of the first valve seat body 12 to tightly press the first valve element body 12 against the second valve seat 5, such that the thermostatic valve element 1 can be prevented from falling out from the second valve seat 5 during use. Then, the second operating portion 21 is mounted at the end of the first valve element body 12 extending out of the water channel body 32; the second operating portion 21 is located outside the water channel body 32, and thereby, it is convenient for the user to adjust the switching valve element 2. At the moment, the first water inlet 313 is externally connected with the cold water inlet pipe, the second water inlet 314 is externally connected with the hot water inlet pipe, the second water outlet 312 is communicated with the water inlet pipe of the wall-hung shower and the first water outlet 311 is communicated with the water inlet pipe of the handheld shower. The hot water inlet 14 and the cold water inlet 15 in the thermostatic valveelement1 are communicated with the third hole 58 and the fourth hole 59 in the second valve seat 5 respectively. The cold water from the first water inlet channel flowing to the fourth hole 59 in the second valve seat 5 via the fourth water passing gap flows into the cold water inlet 15 in the thermostatic valve element 1, and the hot water from the second water inlet channel 329flowing to the third hole 58 via the third water passing gap flows into the hot water inlet 14 of the thermostatic valveelement1, such that normal use of the thermostatic valve element 1 is ensured. Thus, according to the shower set of the embodiment, the user can interchange the positions of the thermostatic valveelement1 and the switching valve element 2 on the main body 3 of the shower according to user requirement.

The description on the description and embodiment are used for explaining the protection scope of the application but does not constitute limitation to the protection scope of the application.

## Claims

1. A shower set, comprising:
a thermostatic valve element (1), one end of the thermostatic valve element(1)being provided with a first water passing port (13) and a side wall of the thermostatic valve element (1) being provided with a hot water inlet (14) and a cold water inlet (15);
a switching valve element (2), one end of the switching valve element (2) being provided with a second water passing port (23) and a third water passing port (24), and a side wall of the switching valve element (2)being provided with a mixed water inlet (25) communicating with the second water passing port (23) and the third water passing port (24);
a main body (3), one end of the main body (3)being provided with a switching valve element accommodation cavity (324) for accommodating the switching valve element (2) and the other end of the main body (3)being provided with a valve seat accommodation cavity; a side wall of the main body (3) being provided with a first water inlet (313) close to the valve seat accommodation cavity and a second water inlet (314) close to the switching valve element accommodation cavity (324) as well as a first water outlet (311) and a second water outlet (312); the first water inlet (313) and the second water inlet (314) used for being externally connected with a cold water inlet pipe and a hot water inlet pipe interchangeably; the first water inlet (313) and the second water inlet (314) being communicated to the valve seat accommodation cavity via a first water inlet channel and a second water inlet channel (329) respectively; the valve seat accommodation cavity being communicated to the mixed water inlet (25) via a first water passing channel (328a); and the second water passing port (23) and the third water passing port (24) of the switching valve element (2) being respectively communicated to the first water outlet (311) and the second water outlet (312) via a second water passing channel (328b) and a third water passing
channel (328c) respectively;
a first valve seat (4) being inserted into the valve seat accommodation cavity when the first water inlet (313) is externally connected with the hot water inlet pipe and the thermostatic valve element(1) being placed in the first valve seat (4), an end portion of the first valve seat (4) being provided with a first opening communicating with the first water passing channel (328a) and the first water passing port (13), a side wall of the first valve seat (4) being provided with a first hole (45) communicating with the hot water inlet (14) and a second hole (46) communicating with the cold water inlet (15), and when the first valve seat (4) is inserted into the valve seat accommodation cavity, the first hole (45) being communicated with the first water inlet channel and the second hole (46) being communicated with the second water inlet channel; and
**characterized in that** a second valve seat (5) is inserted into the valve seat accommodation cavity when the first water inlet (313) is externally connected with the cold water inlet pipe and the thermostatic valve element(1) being placed in the second valve seat(5), an end portion of the second valve seat (5) being provided with a second opening communicating with the first water passing channel (328a) and the first water passing port (13), a side wall of the second valve seat (5) being provided with a third hole (58) communicating with the hot water inlet (14) and a fourth hole (59) communicating with the cold water inlet (15), and when the second valve seat (5) is inserted into the valve seat accommodation cavity, the fourth hole (59) being communicated with the first water inlet channel and the third hole (58) being communicated with the second water inlet channel (329).

2. The shower set according to claim 1, **characterized in that** an end of the thermostatic valve (1) far away from the first water passing port (13) is provided with a first operating portion (11) and an end of the switching valve element (2) far away from the second water passing port (23) is provided with a second operating portion (21);
when the thermostatic valve element(1) is placed in the first valve seat (4) or the second valve seat (5), the first operating portion (11) extends out of the main body (3); and
when the switching valve element (2) is placed in the switching valve element accommodation cavity (324), the second operating portion (21) extends out of the main body (3).

3. The shower set according to claim 1, **characterized in that**
a direction in which the first water inlet (313) is formed is the same as a direction in which the second water inlet (314) is formed;
the first water inlet channel is communicated with the valve seat accommodation cavity along the direction in which the first water inlet (313) is formed; and
the second water inlet channel (329) is communicated with the valve seat accommodation cavity along a direction perpendicular to the direction in which the second water inlet (314) is formed.

4. The shower set according to claim 1, **characterized in that** the first water outlet (311) and the second water outlet (312) are located on a first axis; and
axes of the first water inlet (313) and the second water inlet (314) are perpendicular to the first axis.

5. The shower set according to claim 3, **characterized in that**
a direction in which the first hole (45) is formed is perpendicular to a direction in which the second hole (46) is formed, the first valve seat (4) is further provided with a first water passing channel, and an extending direction of the first water passing channel is the same as a direction along which the first valve seat (4) is inserted into the valve seat accommodation cavity; and
when the first valve seat (4) is inserted into the valve seat accommodation cavity, the first hole (45) is aligned with the first water inlet channel; a first water passing gap and a second water passing gap are formed between the first valve seat (4) and the main body (3); the first water passing gap is communicated with the second water inlet channel (329) and the first water passing channel; and the second water passing gap is communicated with the second hole (46) and the first water passing channel.

6. The shower set according to claim 5, **characterized in that** the third hole (58) is formed along the direction in which the second valve seat (5) is inserted into the valve seat accommodation cavity;
when the second valve seat (5) is inserted into the valve seat accommodation cavity, a third water passing gap and a fourth water passing gap are formed between the second valve seat (5) and the main body (3), and the third water passing gap is communicated with the second water inlet channel (329) and the third hole (58); and the fourth water passing gap is communicated with the first water inlet channel and the fourth hole (59).

7. The shower set according to claim 1, **characterized by** further comprising a first gland cap (6);
the side wall of the thermostatic valve element(1) is circumferentially provided with a first protrusion (16); and
the first gland cap (6) sleeves outside the thermostatic valve element(1), and is in threaded connection with an inner wall of the valve seat accommodation cavity and pushes against the first protrusion (16).

8. The shower set according to claim 1, **characterized by** further comprising a second gland cap (7);
the side wall of the switching valve element (2) is circumferentially provided with a first abutting wall (26); and
the second gland cap (7) sleeves outside the switching valve element (2), and is in threaded connection with an inner wall of the switching valve element accommodation cavity (324) and pushes against the first abutting wall (26).

9. The shower set according to claim 1, **characterized by** further comprising a first joint (a) and a second joint (b),
the first joint (a) and the second joint (b) being mounted on the first water inlet (313) and the second water inlet (314) on the side wall of the main body (3) respectively.

10. The shower set according to claim 1, **characterized by** further comprising a third joint (c) and a fourth joint (d),
the third joint (c) and the fourth joint (d) being mounted on the first water outlet (311) and the second water outlet (312) on the side wall of the main body (3) respectively.

## Patentansprüche

1. Ein Duschset, umfassend:
ein thermostatisches Ventilelement (1), wobei ein Ende des thermostatischen Ventilelements (1) eine erste Wasserdurchlassöffnung (13) umfasst und eine Seitenwand des thermostatischen Ventilelements (1) einen Warmwassereinlass (14) und einen Kaltwassereinlass (15) umfasst;
ein Schaltventilelement (2), wobei ein Ende des Schaltventilelements (2) eine zweite Wasserdurchlassöffnung (23) und eine dritte Wasserdurchlassöffnung (24) umfasst, und eine Seitenwand des Schaltventilelements (2) einen Mischwassereinlass (25) umfasst, der mit der zweiten Wasserdurchlassöffnung (23) und der dritten Wasserdurchlassöffnung (24) kommuniziert;
einen Hauptkörper (3), wobei ein Ende des Hauptkörpers (3) einen Schaltventilelement-Aufnahmehohlraum (324) zur Aufnahme des Schaltventilelements (2) umfasst und das andere Ende des Hauptkörpers (3) einen Ventilsitz-Aufnahmehohlraum umfasst; eine Seitenwand des Hauptkörpers (3), die einen ersten Wassereinlass (313) in der Nähe des Ventilsitz-Aufnahmehohlraums und einen zweiten Wassereinlass (314) in der Nähe des Schaltventilelement-Aufnahmehohlraums (324) sowie einen ersten Wasserauslass (311) und einen zweiten Wasserauslass (312) umfasst; den ersten Wassereinlass (313) und den zweiten Wassereinlass (314), die verwendet werden, um austauschbar mit einem Kaltwassereinlassrohr und einem Warmwassereinlassrohr extern verbunden zu sein; wobei der erste Wassereinlass (313) und der zweite Wassereinlass (314) über einen ersten Wassereinlasskanal bzw. einen zweiten Wassereinlasskanal (329) mit dem Ventilsitz-Aufnahmehohlraum kommuniziert werden; wobei der Ventilsitz-Aufnahmehohlraum über einen ersten Wasserdurchlasskanal (328a) mit dem Mischwassereinlass (25) kommuniziert wird; und wobei die zweite Wasserdurchlassöffnung (23) und die dritte Wasserdurchlassöffnung (24) des Schaltventilelements (2) über einen zweiten Wasserdurchlasskanal (328b) bzw. einen dritten Wasserdurchlasskanal (328c) mit dem ersten Wasserauslass (311) bzw. dem zweiten Wasserauslass (312) kommuniziert werden;
ein erster Ventilsitz (4) wird in den Ventilsitz-Aufnahmehohlraum eingeführt, wenn der erste Wassereinlass (313) extern mit dem Warmwassereinlassrohr verbunden ist und das thermostatische Ventilelement (1) in dem ersten Ventilsitz (4) platziert wird, wobei ein Endabschnitt des ersten Ventilsitzes (4) eine erste Öffnung umfasst, die mit dem ersten Wasserdurchlasskanal (328a) und der ersten Wasserdurchlassöffnung (13) kommuniziert, wobei eine Seitenwand des ersten Ventilsitzes (4) ein erstes Loch (45) umfasst, das mit dem Warmwassereinlass (14) kommuniziert, und ein zweites Loch (46), das mit dem Kaltwassereinlass (15) kommuniziert, und wenn der erste Ventilsitz (4) in den Ventilsitz-Aufnahmehohlraum eingeführt wird, wird das erste Loch (45) mit dem ersten Wassereinlasskanal kommuniziert und das zweite Loch (46) mit dem zweiten Wassereinlasskanal kommuniziert; und
**dadurch gekennzeichnet, dass** ein zweiter Ventilsitz (5) in den Ventilsitz-Aufnahmehohlraum eingeführt wird, wenn der erste Wassereinlass (313) extern mit dem Kaltwassereinlassrohr verbunden ist und das thermostatische Ventilelement (1) in dem zweiten Ventilsitz(5) platziert wird, wobei ein Endabschnitt des zweiten Ventilsitzes (5) eine zweite Öffnung umfasst, die mit dem ersten Wasserdurchlasskanal (328a) und der ersten Wasserdurchlassöffnung (13) kommuniziert, wobei eine Seitenwand des zweiten Ventilsitzes (5) ein drittes Loch (58) umfasst, das mit dem Warmwassereinlass (14) kommuniziert, und ein viertes Loch (59), das mit dem Kaltwassereinlass (15) kommuniziert, und wenn der zweite Ventilsitz (5) in den Ventilsitz-Aufnahmehohlraum eingeführt wird, wird das vierte Loch (59) mit dem ersten Wassereinlasskanal kommuniziert und das dritte Loch (58) mit dem zweiten Wassereinlasskanal (329) kommuniziert.

2. Duschset nach Anspruch 1, **dadurch gekennzeichnet, dass** ein von der ersten Wasserdurchlassöffnung (13) weit entferntes Ende des Thermostatventils (1) einen ersten Betätigungsabschnitt (11) und ein von der zweiten Wasserdurchlassöffnung (23) weit entferntes Ende des Schaltventilelements (2) einen zweiten Betätigungsabschnitt (21) umfasst;
wenn das thermostatische Ventilelement (1) in dem ersten Ventilsitz (4) oder dem zweiten Ventilsitz (5) platziert ist, erstreckt sich der erste Betätigungsabschnitt (11) aus den Hauptkörper (3) heraus; und
wenn das Schaltventilelement (2) in dem Schaltventilelement-Aufnahmehohlraum (324) platziert ist, erstreckt sich der zweite Betätigungsabschnitt (21) aus dem Grundkörper (3) heraus.

3. Duschset nach Anspruch 1, **dadurch gekennzeichnet, dass**
eine Richtung, in der der erste Wassereinlass (313) gebildet wird, gleich ist wie eine Richtung, in der der zweite Wassereinlass (314) gebildet wird;
der erste Wassereinlasskanal in der Richtung, in der der erste Wassereinlass (313) gebildet wird, mit dem Ventilsitz-Aufnahmehohlraum kommuniziert wird; und
der zweite Wassereinlasskanal (329) in einer Richtung senkrecht zu der Richtung, in der der zweite Wassereinlass (314) gebildet wird, mit dem Ventilsitz-Aufnahmehohlraum kommuniziert wird.

4. Duschset nach Anspruch 1, **dadurch gekennzeichnet, dass** sich der erste Wasserauslass (311) und der zweite Wasserauslass (312) auf einer ersten Achse befinden; und
Achsen des ersten Wassereinlasses (313) und des zweiten Wassereinlasses (314) senkrecht zur ersten Achse stehen.

5. Duschset nach Anspruch 3, **dadurch gekennzeichnet, dass**
eine Richtung, in der das erste Loch (45) gebildet wird, senkrecht zu einer Richtung ist, in der das zweite Loch (46) gebildet wird, wobei der erste Ventilsitz (4) ferner einen ersten Wasserdurchlasskanal umfasst, und eine Verlängerungsrichtung des ersten Wasserdurchlasskanals dieselbe ist wie eine Richtung, entlang der der erste Ventilsitz (4) in den Ventilsitz-Aufnahmehohlraum eingeführt wird; und
wenn der erste Ventilsitz (4) in den Ventilsitz-Aufnahmehohlraum eingeführt wird, fluchtet das erste Loch (45) mit dem ersten Wassereinlasskanal; ein erster Wasserdurchlassspalt und ein zweiter Wasserdurchlassspalt werden zwischen dem ersten Ventilsitz (4) und dem Hauptkörper (3) gebildet; der erste Wasserdurchlassspalt wird mit dem zweiten Wassereinlasskanal (329) und dem ersten Wasserdurchlasskanal kommuniziert; und der zweite Wasserdurchlassspalt wird mit dem zweiten Loch (46) und dem ersten Wasserdurchlasskanal kommuniziert.

6. Duschset nach Anspruch 5, **dadurch gekennzeichnet, dass** das dritte Loch (58) entlang der Richtung gebildet wird, in der der zweite Ventilsitz (5) in den Ventilsitz-Aufnahmehohlraum eingeführt wird;
wenn der zweite Ventilsitz (5) in den Ventilsitz-Aufnahmehohlraum eingeführt wird, wird zwischen dem zweiten Ventilsitz (5) und dem Hauptkörper (3) ein dritter Wasserdurchlassspalt und ein vierter Wasserdurchlassspalt gebildet, und der dritte Wasserdurchlassspalt wird mit dem zweiten Wassereinlasskanal (329) und dem dritten Loch (58) kommuniziert; und der vierte Wasserdurchlassspalt wird mit dem ersten Wassereinlasskanal und dem vierten Loch (59) kommuniziert.

7. Duschset nach Anspruch 1, **dadurch gekennzeichnet, dass** es ferner eine erste Stopfbuchsenkappe (6) umfasst;
die Seitenwand des thermostatischen Ventilelements (1) umfasst umlaufend einen ersten Vorsprung (16); und
die erste Stopfbuchsenkappe (6) bildet eine Hülse außerhalb des thermostatischen Ventilelements (1) und steht in Gewindeverbindung mit einer Innenwand des Ventilsitz-Aufnahmehohlraums und drückt gegen den ersten Vorsprung (16).

8. Duschset nach Anspruch 1, **dadurch gekennzeichnet, dass** es ferner eine zweite Stopfbuchsenkappe (7) umfasst;
die Seitenwand des Schaltventilelements (2) umfasst umlaufend eine erste Anschlagwand (26); und
die zweite Stopfbuchsenkappe (7) bildet eine Hülse außerhalb des Schaltventilelements (2), und steht in Gewindeverbindung mit einer Innenwand des Schaltventilelement-Aufnahmehohlraums (324) und drückt gegen die erste Anschlagwand (26).

9. Duschset nach Anspruch 1, **dadurch gekennzeichnet, dass** es ferner eine erste Verbindung (a) und eine zweite Verbindung (b) umfasst,
wobei die erste Verbindung (a) und die zweite Verbindung (b) jeweils an dem ersten Wassereinlass (313) und dem zweiten Wassereinlass (314) an der Seitenwand des Hauptkörpers (3) montiert sind.

10. Duschset nach Anspruch 1, **dadurch gekennzeichnet, dass** es ferner eine dritte Verbindung (c) und eine vierte Verbindung (d) umfasst,
wobei die dritte Verbindung (c) und die vierte Verbindung (d) jeweils an dem ersten Wasserauslass (311) und dem zweiten Wasserauslass (312) an der Seitenwand des Hauptkörpers (3) montiert sind.

## Revendications

1. Un ensemble de douche, comprenant :
un élément de soupape thermostatique (1), une extrémité de l'élément de soupape thermostatique (1) comprenant un premier orifice de passage d'eau (13) et une paroi latérale de l'élément de soupape thermostatique (1) comprenant une entrée d'eau chaude (14) et une entrée d'eau froide (15) ;
un élément de soupape de commutation (2), une extrémité de l'élément de soupape de commutation (2) comprenant un deuxième orifice de passage d'eau (23) et un troisième orifice de passage d'eau (24), et une paroi latérale de l'élément de soupape de commutation (2) comprenant une entrée d'eau mélangée (25) communiquant avec le deuxième orifice de passage d'eau (23) et le troisième orifice de passage d'eau (24) ;
un corps principal (3), une extrémité du corps principal (3) comprenant une cavité de logement (324) de l'élément de soupape de commutation pour loger l'élément de soupape de commutation (2) et l'autre extrémité du corps principal (3) comprenant une cavité de logement du siège de soupape ; une paroi latérale du corps principal (3) comprenant une première entrée d'eau (313) proche de la cavité de logement du siège de soupape et une deuxième entrée d'eau (314) proche de la cavité de logement (324) de l'élément de soupape de commutation ainsi qu'une première sortie d'eau (311) et une deuxième sortie d'eau (312) ; la première entrée d'eau (313) et la deuxième entrée d'eau (314) étant utilisées pour être reliées de manière externe à un tuyau d'entrée d'eau froide et à un tuyau d'entrée d'eau chaude de manière interchangeable ; la première entrée d'eau (313) et la deuxième entrée d'eau (314) étant en communication avec la cavité de logement du siège de soupape via un premier canal d'entrée d'eau et un deuxième canal d'entrée d'eau (329) respectivement ; la cavité de logement du siège de soupape étant en communication avec l'entrée d'eau mélangée (25) via un premier canal de passage d'eau (328a) ; et le deuxième orifice de passage d'eau (23) ainsi que le troisième orifice de passage d'eau (24) de l'élément de soupape de commutation (2) étant respectivement en communication avec la première sortie d'eau (311) et la deuxième sortie d'eau (312) via un deuxième canal de passage d'eau (328b) et un troisième canal de passage d'eau (328c) respectivement ;
un premier siège de soupape (4) étant inséré dans la cavité de logement du siège de soupape lorsque la première entrée d'eau (313) est reliée de manière externe au tuyau d'entrée d'eau chaude et l'élément de soupape thermostatique (1) étant placé dans le premier siège de soupape (4), une partie d'extrémité du premier siège de soupape (4) comprenant une première ouverture communiquant avec le premier canal de passage d'eau (328a) et le premier orifice de passage d'eau (13), une paroi latérale du premier siège de soupape (4) comprenant un premier trou (45) communiquant avec l'entrée d'eau chaude (14) et un deuxième trou (46) communiquant avec l'entrée d'eau froide (15), et lorsque le premier siège de soupape (4) est inséré dans la cavité de logement du siège de soupape, le premier trou (45) étant en communication avec le premier canal d'entrée d'eau et le deuxième trou (46) étant en communication avec le deuxième canal d'entrée d'eau ; et
**caractérisé en ce qu'**un deuxième siège de soupape (5) est inséré dans la cavité de logement du siège de soupape lorsque la première entrée d'eau (313) est reliée de manière externe au tuyau d'entrée d'eau froide et l'élément de soupape thermostatique (1) étant placé dans le deuxième siège de soupape (5), une partie d'extrémité du deuxième siège de soupape (5) comprenant une deuxième ouverture communiquant avec le premier canal de passage d'eau (328a) et le premier orifice de passage d'eau (13), une paroi latérale du deuxième siège de soupape (5) comprenant un troisième trou (58) communiquant avec l'entrée d'eau chaude (14) et un quatrième trou (59) communiquant avec l'entrée d'eau froide (15), et lorsque le deuxième siège de soupape (5) est inséré dans la cavité de logement du siège de soupape, le quatrième trou (59) étant en communication avec le premier canal d'entrée d'eau et le troisième trou (58) étant en communication avec le deuxième canal d'entrée d'eau (329).

2. L'ensemble de douche selon la revendication 1, **caractérisé en ce qu'**une extrémité de la soupape thermostatique (1) éloignée du premier orifice de passage d'eau (13) comprend une première partie de fonctionnement (11) et une extrémité de l'élément de soupape de commutation (2) éloignée du deuxième orifice de passage d'eau (23) comprend une deuxième partie de fonctionnement (21) ;
lorsque l'élément de soupape thermostatique (1) est placé dans le premier siège de soupape (4) ou le deuxième siège de soupape (5), la première partie de fonctionnement (11) s'étend hors du corps principal (3) ; et
lorsque l'élément de soupape de commutation (2) est placé dans la cavité de logement (324) de l'élément de soupape de commutation, la deuxième partie de fonctionnement (21) s'étend hors du corps principal (3).

3. L'ensemble de douche selon la revendication 1, **caractérisé en ce que**
une direction dans laquelle la première entrée d'eau (313) est formée est la même qu'une direction dans laquelle la deuxième entrée d'eau (314) est formée ;
le premier canal d'entrée d'eau est en communication avec la cavité de logement du siège de soupape le long de la direction dans laquelle la première entrée d'eau (313) est formée ; et
le deuxième canal d'entrée d'eau (329) est en communication avec la cavité de logement du siège de soupape le long d'une direction perpendiculaire à la direction dans laquelle la deuxième entrée d'eau (314) est formée.

4. L'ensemble de douche selon la revendication 1, **caractérisé en ce que** la première sortie d'eau (311) et la deuxième sortie d'eau (312) sont situées sur un premier axe ; et
les axes de la première entrée d'eau (313) et de la deuxième entrée d'eau (314) sont perpendiculaires au premier axe.

5. L'ensemble de douche selon la revendication 3, **caractérisé en ce que**
une direction dans laquelle le premier trou (45) est formé est perpendiculaire à une direction dans laquelle le deuxième trou (46) est formé, le premier siège de soupape (4) comprend en outre un premier canal de passage d'eau, et une direction d'extension du premier canal de passage d'eau est la même qu'une direction le long de laquelle le premier siège de soupape (4) est inséré dans la cavité de logement du siège de soupape ; et
lorsque le premier siège de soupape (4) est inséré dans la cavité de logement du siège de soupape, le premier trou (45) est aligné avec le premier canal d'entrée d'eau ; un premier intervalle de passage d'eau et un deuxième intervalle de passage d'eau sont formés entre le premier siège de soupape (4) et le corps principal (3) ; le premier intervalle de passage d'eau est en communication avec le deuxième canal d'entrée d'eau (329) et le premier canal de passage d'eau ; et le deuxième intervalle de passage d'eau est en communication avec le deuxième trou (46) et le premier canal de passage d'eau.

6. L'ensemble de douche selon la revendication 5, **caractérisé en ce que** le troisième trou (58) est formé le long de la direction dans laquelle le deuxième siège de soupape (5) est inséré dans la cavité de logement du siège de soupape ;
lorsque le deuxième siège de soupape (5) est inséré dans la cavité de logement du siège de soupape, un troisième intervalle de passage d'eau et un quatrième intervalle de passage d'eau sont formés entre le deuxième siège de soupape (5) et le corps principal (3), et le troisième intervalle de passage d'eau est en communication avec le deuxième canal d'entrée d'eau (329) et le troisième trou (58) ; et le quatrième intervalle de passage d'eau est en communication avec le premier canal d'entrée d'eau et le quatrième trou (59).

7. L'ensemble de douche selon la revendication 1, **caractérisé en ce qu'**il comprend en outre un premier capuchon de presse-étoupe (6) ;
la paroi latérale de l'élément de soupape thermostatique (1) comprenant de manière circonférentielle une première protubérance (16) ; et
le premier capuchon de presse-étoupe (6) est emmanché à l'extérieur de l'élément de soupape thermostatique (1), et est en liaison filetée avec une paroi interne de la cavité de logement du siège de soupape et pousse contre la première protubérance (16).

8. L'ensemble de douche selon la revendication 1, **caractérisé en ce qu'**il comprend en outre un deuxième capuchon de presse-étoupe (7) ;
la paroi latérale de l'élément de soupape de commutation (2) comprend de manière circonférentielle une première paroi de butée (26) ; et
le deuxième capuchon de presse-étoupe (7) est emmanché à l'extérieur de l'élément de soupape de commutation (2), et est en liaison filetée avec une paroi interne de la cavité de logement (324) de l'élément de soupape de commutation et pousse contre la première paroi de butée (26).

9. L'ensemble de douche selon la revendication 1, **caractérisé en ce qu'**il comprend en outre un premier joint (a) et un deuxième joint (b),
le premier joint (a) et le deuxième joint (b) étant montés sur la première entrée d'eau (313) et la deuxième entrée d'eau (314) sur la paroi latérale du corps principal (3) respectivement.

10. L'ensemble de douche selon la revendication 1, **caractérisé en ce qu'**il comprend en outre un troisième joint (c) et un quatrième joint (d),
le troisième joint (c) et le quatrième joint (d) étant montés sur la première sortie d'eau (311) et la deuxième sortie d'eau (312) sur la paroi latérale du corps principal (3) respectivement.
